# EUROPEAN PATENT APPLICATION

(11) **EP 4 653 210 A1**
(43) Date of publication of application: **26.11.2025**
(21) Application number: 23916906.3
(22) Date of filing: 10.03.2023
(51) Int. Cl.: B60C 9/02, B60C 19/00

(54) **TIRE AND TIRE MOLD**

(30) Priority: 18.01.2023 CN 202320142006 U
(71) Applicant: Mesnac Union Technology Co., Ltd., Weifang, Shandong 262232 (CN)
(72) Inventor: ZHOU, Chuanhai, Weifang, Shandong 262232 (CN); XIE, Libo, Weifang, Shandong 262232 (CN); YUAN, Lei, Weifang, Shandong 262232 (CN); HUANG, Zongmao, Weifang, Shandong 262232 (CN)
(74) Representative: Studio Torta S.p.A.
(86) International application number: PCT/CN2023/080894
(87) International publication number: WO 2024/152430

(57) **Abstract**

The present invention provides a tire and a tire mold. The tire includes: a tire body, at least one groove is formed in the side face of the tire body, a plurality of pattern units are disposed in the groove, the plurality of pattern units are arranged in the groove in an array and protrude out of the bottom wall of the groove, the pattern unit is of a polygonal structure, and the length of at least one side or diagonal line in the polygonal structure is greater than 20 mm; or the pattern unit is of a circular structure, and the diameter of the circular structure is greater than 20 mm. With structure of the tire of the present invention, the problem of unstable tire quality in the relevant art is solved.

## Description

### Technical Field

The present invention relates to the technical field of tire manufacturing, and in particular to a tire and a tire mold.

### Background

An automobile tire is one of important parts of an automobile, which is directly contacted with the ground, and is configured for relieving impact on the automobile when the automobile runs together with an automobile suspension, so that the automobile is ensured to have good riding comfort and running smoothness, and meanwhile, a good automobile tire may also improve traction, braking and trafficability of the automobile.

When a traditional tire is manufactured, a green tire is first formed on a molding machine, and then vulcanized in a vulcanizing machine, and finally the tire is formed. At present, when the green tire is vulcanized, the vulcanized tire has the defects of pits and the like on a tire tread due to the problems of tire vulcanization temperature, insufficient rubber material of the green tire and the like, so that the quality of the tire is seriously influenced, the reject ratio of the tire is high, meanwhile, a tire side of the existing tire is easy to wear in a carrying process, and the service life of the tire is directly influenced after scratch.

### Summary

A plurality of embodiments of present invention provide a tire and a tire mold to solve the problem of unstable tire quality in the relevant art.

In an embodiment of the present invention, a tire is provided, which includes: a tire body, at least one groove is formed in the side face of the tire body, a plurality of pattern units are disposed in the groove, the plurality of pattern units are arranged in the groove in an array and protrude out of or sink into the bottom wall of the groove, the pattern units are inscribed in a circle with a diameter greater than 20 mm, and the pattern unit is formed by combining at least one of straight lines and arcs.

In an embodiment of the present invention, the pattern unit includes a plurality of folding line structures, at least parts of which are connected to each other.

In an embodiment of the present invention, the folding line structure includes a plurality of folding line segments which are connected in sequence, and any two adjacent folding line segments are disposed in a mutually perpendicular mode.

In an embodiment of the present invention, the numbers of the folding line segments in each folding line structure are not exactly the same.

In an embodiment of the present invention, the lengths of the folding line segments in the folding line structure are not exactly the same.

In an embodiment of the present invention, the distance between any two adjacent parallel folding line segments on the pattern unit is b, and 0.1 mm≤b≤0.5mm.

In an embodiment of the present invention, the folding line structure protrudes out of the groove bottom of the groove, the height difference from the top end of the folding line structure to the groove bottom is h, and 0.15mm≤h≤0.6mm.

In an embodiment of the present invention, the section of the folding line structure is triangular, the angle of the top of the triangle is α, and 20°≤α≤45°.

In an embodiment of the present invention, two ends of each folding line segment in the folding line structure are respectively connected with the side wall of the groove or another folding line segment.

In an embodiment of the present invention, the pattern unit is of a polygonal structure, and the length of at least one side or diagonal line in the polygonal structure is greater than 20 mm; or the pattern unit is of a circular structure, and the diameter of the circular structure is greater than 20 mm.

In an embodiment of the present invention, the pattern unit includes a plurality of sealing areas formed by connecting a plurality of straight lines or arcs, and at least one of the shapes and the areas of the plurality of sealing areas is not exactly the same.

In an embodiment of the present invention, the pattern units are inscribed in a circle with a diameter greater than 25 mm and smaller than 100 mm.

The present invention further provides a tire mold, which is configured for manufacturing a tire, at least one convex module is disposed on the tire mold, the convex module is configured for forming a groove of the tire described above, a plurality of textures are disposed on the convex module, and the plurality of textures are configured for forming a pattern unit of the tire described above.

The tire adopting the technical solution of the present invention includes: the tire body, at least one groove is formed in the side face of the tire body, the plurality of pattern units are disposed in the groove, the plurality of pattern units are arranged in the groove in an array, the pattern unit is of a polygonal structure, and the length of at least one side or diagonal line in the polygonal structure is greater than 20 mm; or the pattern unit is of a circular structure, and the diameter of the circular structure is greater than 20 mm. According to the tire of the present invention, the groove and the pattern units are disposed on the side face of the tire body for containing the above defects of the tire during vulcanization, so as to prevent the above defects from falling on the tire tread or other important structures that affect the quality of the tire, resulting in defective products. The defects on the tire side only affect the attractiveness of the tire but not the quality of the tire, so that the tire cannot be judged as an unqualified product, the reject ratio of the tire is reduced, and the stability of quality is improved. Furthermore, the pattern units in the present invention are arranged in the groove in an array, in order to facilitate marking and produce visual effects of different distances, the size of the pattern unit in the present invention is disposed as the polygonal structure or the circular structure, the size of the pattern unit needs to be greater than 20 mm, if it is too small, the pattern will lose expression meaning, when people observe the tire side at different distances, the pattern is black, the identification and enjoyment are poor, while when the pattern is greater than 20 mm, when people observe the pattern on the tire side at different distances, different visions may be generated, different visual effects may be formed according to different patterns, meanwhile, after the size of the pattern unit is enlarged, it is more convenient for processing the tire mold, and the structural strength of the pattern unit module is improved.

### Brief Description of the Drawings

The drawings forming a part of the present invention in the specification are adopted to provide a further understanding to the present invention. Schematic embodiments of the present invention and descriptions thereof are adopted to explain the present invention and not intended to form improper limits to the present invention. In the drawings:
Fig. 1 illustrates a schematic diagram of a pattern unit of an embodiment of a tire according to the present invention.
Fig. 2 illustrates a schematic diagram of A-A in Fig. 1.
Fig. 3 illustrates a schematic diagram of one side of an embodiment of a tire of the present invention.

The drawings include the following reference signs.
10. Tire body; 11. Groove; 12. Pattern unit; and 121. Folding line structure.

### Detailed Description of the Embodiments

It is to be noted that the embodiments and features in the embodiments of the present invention may be combined with each other without conflict. The present invention will be described in detail below with reference to the accompanying drawings and the embodiments.

In order to solve the problem of unstable tire quality in the relevant art, the present invention provides a tire and a tire mold.

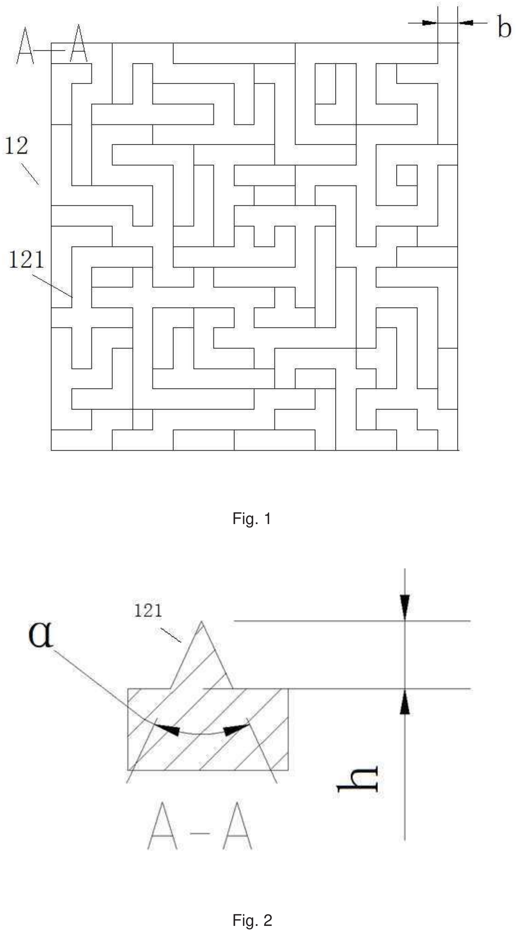

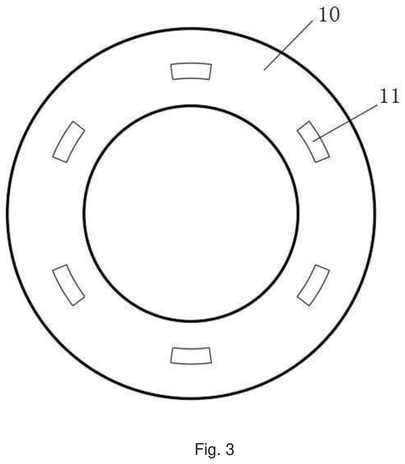

Referring to Figs. 1-3, the tire of the present invention includes: a tire body 10, at least one groove 11 is formed in the side face of the tire body 10, a plurality of pattern units 12 are disposed in the groove 11, the plurality of pattern units 12 are arranged in the groove 11 in an array and protrude out of or sink into the bottom wall of the groove 11, the pattern units 12 are inscribed in a circle with a diameter greater than 20 mm, and the pattern unit 12 is formed by combining at least one of straight lines and arcs.

The pattern unit 12 may be formed by only straight lines and arcs, of course, the pattern unit 12 may also be formed by combining the straight lines and arcs.

At present, when a rubber tire is vulcanized, some bubbles will inevitably occur or a tire tread of the tire may have pits due to lack of rubber or other environmental factors, which seriously affects the quality of the tire. To this end, the groove 11 and the pattern units 12 are disposed on the side face of the tire body 10 for containing the above defects of the tire during vulcanization, so as to prevent the above defects from falling on the tire tread or other important structures that affect the quality of the tire, resulting in defective products. The defects on the tire side only affect the attractiveness of the tire but not the quality of the tire, so that the tire cannot be judged as an unqualified product, the reject ratio of the tire is reduced, and the stability of quality is improved. Furthermore, the pattern units 12 in the present invention are arranged in the groove 11 in an array, in order to facilitate marking and produce visual effects of different distances, the pattern units 12 are inscribed in a circle with a diameter greater than 20 mm, the pattern unit 12 is formed by combining straight lines and arcs, if it is too small, the pattern will lose expression meaning, when people observe the tire side at different distances, the pattern is black, the identification and enjoyment are poor, while when the pattern is greater than 20 mm, when people observe the pattern on the tire side at different distances, different visions may be generated, different visual effects may be formed according to different patterns, meanwhile, after the size of the pattern unit 12 is enlarged, it is more convenient for processing the tire mold, and the structural strength of the pattern unit 12 module is improved.

The pattern unit may be textures protruding on the bottom wall or the pattern unit may be textures sinking on the bottom wall.

Preferably, the size of the pattern unit 12 is greater than 25 mm and smaller than 100 mm, if it is too small, the pattern cannot be seen clearly, if it is too large, it is difficult to distinguish between the pattern unit and the bottom wall of the groove, and the visual effect is not prominent.

In addition, the shape of the pattern unit 12 may also be simply replaced by an oval or other curved structure, which are simple replacements for the above shapes listed in the present invention and are not listed here.

According to an embodiment, a plurality of grooves 11 are disposed on the side face of the tire body 10, the plurality of grooves 11 are disposed surrounding the side face of the tire body 10, specifically, with the center of the tire as the center of the circle, the grooves 11 are distributed on the side face in the form of equal distance from the center of the circle, and the intervals between any two adjacent grooves 11 are equal. Or, the plurality of grooves 11 are separated into a plurality of groups, the center of the tire is taken as the center of the circle, the distances of the grooves 11 in the different groups to the center of the circle are different, the distances of the grooves 11 in the same group to the center of the circle are equal, and meanwhile, the plurality of grooves 11 in each group are uniformly distributed on the side face of the tire, so as to avoid the problem of instability caused by uneven weight when the tire rotates at a high speed.

The pattern unit 12 includes a plurality of folding line structures 121, of course, the pattern unit 12 not only has the folding line structure 121, but also includes a straight line with a line segment, at least part of the plurality of folding line structure 121 is connected to each other, the folding line structure 121 is formed by connecting a plurality of line segments in sequence, and the folding line structures 121 are connected to each other, so as to ensure the structural strength of the entire pattern unit 12.

The folding line structure 121 includes a plurality of folding line segments which are connected in sequence, and any two adjacent folding line segments are disposed in a mutually perpendicular mode. The numbers of the folding line segments in each folding line structure 121 are not exactly the same. The lengths of the folding line segments in the folding line structure 121 are not exactly the same. Through the above arrangement, the pattern unit 12 forms a maze-like structure, and the direction of each folding line segment on each folding line structure 121 may be of a clockwise angle of 90° or a counterclockwise angle of 90°, without following a rule, so that different visual effects may be produced at different positions and distances.

Meanwhile, in order to facilitate distinguishing, when two parallel folding line segments are too close, they may be considered as one line during observation, which is not conducive to distinguishing in reflection, and different visions cannot be generated at different positions and distances. In the present invention, the distance between any two adjacent parallel folding line segments on the pattern unit 12 is set to b, 0.1 mm≤b≤0.5mm, so that the problem of failure in distinguishing caused by too small distance of the two parallel folding line segments is solved, the problem that the folding line structures 121 of the pattern unit 12 are not dense enough is also solved, if it is not dense enough, the visual effect generated at the groove 11 may not obviously differs from the tire side without the groove 11, and the expression is not obvious.

The folding line structure 121 protrudes out of the groove bottom of the groove 11, the plurality of folding line structure 121 are connected with each other to define a plurality of sealing spaces, so as to ensure the structural strength of the folding line structure 121 and the whole pattern unit 12, in order to form different visual aberration between the pattern unit 12 and the groove bottom of the groove 11, the section of the folding line structure 121 is triangular, the angle of the top of the triangle is α, and 20°≤α≤45°. In the present invention, the height difference between the convex top end of the folding line structure 121 and the groove bottom is h, 0.15mm≤h≤0.6mm, that is, the distance between the vertex of the triangle and the groove bottom is h. In addition, the section of the folding line structure 121 may also adopt a trapezoidal structure, or the section of the folding line structure 121 adopts the setting form that the top is a triangle and the bottom is a rectangle.

In addition to the folding line structure 121 extending to the boundary of the pattern unit 12, two ends of each folding line segment of each folding line structure 121 located in the pattern unit 12 are respectively connected with another folding line segment, which may be a folding line segment of the same folding line structure 121 or a folding line segment of another folding line structure 121, thus, each sealed space is formed inside the pattern unit 12, and because two ends of the folding line segment are inevitably connected with other folding line segments, the strength of the whole folding line structure 121 is ensured.

The pattern unit 12 is of a polygonal structure, and the length of at least one side or diagonal line in the polygonal structure is greater than 20 mm; or the pattern unit 12 is of a circular structure, and the diameter of the circular structure is greater than 20 mm. The size of the pattern unit 12 in the present invention is disposed as a polygonal structure or a circular structure, the size of the pattern unit 12 needs to be greater than 20 mm, so as to facilitate recognition and marking.

As shown in Fig. 1, preferably, the pattern unit is a regular polygon, taking that the pattern unit 12 is a square as an example, the side length of the square is greater than 21 mm and smaller than 100 mm, and the length of the diagonal line of the square is greater than 25 mm.

The pattern unit 12 includes a plurality of sealing areas formed by connecting a plurality of straight lines or arcs, and at least one of the shapes and the areas of the plurality of sealing areas is not exactly the same, so as to form a maze pattern, of course, the shapes and areas of the plurality of sealing areas may also be completely different.

Further explanation: in any area with an area B of the pattern unit, it is possible to distinguish non-repetitive closed areas with an area of C by connecting hanging end points of any line not connected with other arcs or straight lines in the area with hanging end points of a nearest line not connected with other arcs or straight lines or intersection points between lines, so that the pattern unit may finally form a maze or maze-like pattern.

The present invention further provides a tire mold, which is configured for manufacturing the tire above, at least one convex module is disposed on the tire mold, the convex module is configured for forming a groove 11 of the tire described above, a plurality of textures are disposed on the convex module, and the plurality of textures are configured for forming a pattern unit 12 of the tire described above.

When the textures on the convex module are troughs, the pattern unit formed on the tire protrudes out of the bottom wall of the groove; and when the textures on the convex module are protrusions, the pattern unit formed on the tire sinks in the bottom wall of the groove.

From the above description, it can be seen that the above embodiments of the present invention achieve the following technical effects.

The pattern units 12 in the present invention are arranged in the groove 11 in an array, in order to facilitate marking and produce visual effects of different distances, the size of the pattern unit 12 in the present invention is disposed as the polygonal structure or the circular structure, the size of the pattern unit 12 needs to be greater than 20 mm, if it is too small, the pattern will lose expression meaning, when people observe the tire side at different distances, the pattern is black, the identification and enjoyment are poor, while when the pattern is greater than 20 mm, when people observe the pattern on the tire side at different distances, different visions may be generated, different visual effects may be formed according to different patterns, meanwhile, after the size of the pattern unit 12 is enlarged, it is more convenient for processing the tire mold, and the structural strength of the pattern unit 12 module is improved.

For the tire of the maze structure of the present invention, the pattern of the tire side is an irregular dense closed pattern formed by a single line through winding and rotating, the same line is used without disconnection, so that the strength of the tire pattern after vulcanization may be higher, and meanwhile, the dense line enables the surface of the tire pattern to have aberration, so that the quality of the tire is improved. Through direction arrangement of the line, a specific effect is formed on the surface of the pattern, so that the problems that a pattern of a tire side of a tire at present is single and the attractiveness is poor are solved, and meanwhile, the exhaust efficiency during vulcanization of the tire may be improved.

The foregoing is merely preferred embodiments of the present invention and is not intended to limit the present invention, and various modifications and variations of the present invention may be available for those skilled in the art. Any modifications, equivalent replacements, improvements and the like made within the spirit and principle of the present invention shall fall within the scope of protection of the present invention.

## Claims

1. A tire, comprising:
a tire body (10), at least one groove (11) is formed in the side face of the tire body (10), a plurality of pattern units (12) are disposed in the groove (11), the plurality of pattern units (12) are arranged in the groove (11) in an array and protrude out of or sink into the bottom wall of the groove (11), wherein
the pattern units (12) are inscribed in a circle with a diameter greater than 20 mm, and the pattern unit (12) is formed by combining at least one of straight lines and arcs.

2. The tire according to claim 1, wherein the pattern unit (12) comprises a plurality of folding line structures (121), and at least parts of the plurality of folding line structures (121) are connected to each other.

3. The tire according to claim 2, wherein the folding line structure (121) comprises a plurality of folding line segments which are connected in sequence, and any two adjacent folding line segments are disposed in a mutually perpendicular mode.

4. The tire according to claim 3, wherein the numbers of the folding line segments in each folding line structure (121) are not exactly the same.

5. The tire according to claim 3, wherein the lengths of the folding line segments in the folding line structure (121) are not exactly the same.

6. The tire according to claim 3, wherein the distance between any two adjacent parallel folding line segments on the pattern unit (12) is b, and 0.1mm≤b≤0.5mm.

7. The tire according to claim 2, wherein the folding line structure (121) protrudes out of the groove bottom of the groove (11), the height difference from the top end of the folding line structure (121) to the groove bottom is h, and 0.15mm≤h≤0.6mm.

8. The tire according to claim 2, wherein the section of the folding line structure (121) is triangular, the angle of the top of the triangle is α, and 20°≤α≤45°.

9. The tire according to claim 2, wherein two ends of each folding line segment in the folding line structure (121) are respectively connected with the side wall of the groove or another folding line segment.

10. The tire according to claim 1, wherein the pattern unit (12) is of a polygonal structure, and the length of at least one side or diagonal line in the polygonal structure is greater than 20 mm; or
the pattern unit (12) is of a circular structure, and the diameter of the circular structure is greater than 20 mm.

11. The tire according to claim 1, wherein the pattern unit (12) comprises a plurality of sealing areas formed by connecting a plurality of straight lines or arcs, and at least one of the shapes and the areas of the plurality of sealing areas is not exactly the same.

12. The tire according to claim 1, wherein the pattern units (12) are inscribed in a circle with a diameter greater than 25 mm and smaller than 100 mm.

13. A tire mold, which is configured for manufacturing the tire according to any of claims 1-12, wherein at least one convex module is disposed on the tire mold, the convex module is configured for forming a groove (11) of the tire described above, a plurality of textures are disposed on the convex module, and the plurality of textures are configured for forming a pattern unit (12) of the tire described above.
